# EUROPEAN PATENT APPLICATION

(11) **EP 4 391 473 A1**
(43) Date of publication of application: **26.06.2024**
(21) Application number: 23219525.5
(22) Date of filing: 21.12.2023
(51) Int. Cl.: H04L 41/147, H04L 41/149, H04L 41/16, H04L 47/127, H04L 47/70

(54) **SYSTEM AND METHOD FOR CAPACITY PLANNING**

(30) Priority: 22.12.2022 US 202263476819 P
(71) Applicant: Sandvine Corporation, Waterloo, Ontario N2L 3V3 (CA)
(72) Inventor: KANASUPRAMANIAM, Kavi, Milton, L9E 1R2 (CA); HAVANG, Alexander, 211 20 Malmo (SE); ARIAS, Carlos, Durham, 27703 (US); SAJID, Atif, Plano, 75024 (US)
(74) Representative: Ipey

(57) **Abstract**

A method for capacity planning in a computer network, the method includes: determining traffic flow, application and network parameters; collecting the parameters for a predetermined time period; determining the features or parameters associated with various growth models; and combining the growth models to determine network capacity planning and congestion management planning for the network. A system for capacity planning in a computer network, the system including: a data collection module configured to collect data and parameters associated with the traffic flow, applications and nodes and links on the network; a forecasting module having a prediction engine configured to predict growth based on the QoE determined from the collected parameters; and a traffic action module configured to provide growth results and/or congestion management options.

## Description

### RELATED APPLICATIONS

The present disclosure claims priority to U.S. Provisional Patent Application No. 63/476,819 filed December 22, 2022.

### FIELD

The present disclosure relates generally to computer network traffic. More particularly, the present disclosure relates to a system and method for capacity planning and congestion management planning in a computer network.

### BACKGROUND

Service Providers, including Internet Service Providers (ISP) want to know what type of traffic flows and how much traffic overall there is on their networks. Further, to provide subscribers with appropriate levels of Quality of Experience (QoE) and/or Quality of Service (QoS), it is beneficial to understand the applications, content, congestion levels and the like on the network to determine whether the network is appropriately meeting the subscriber's needs.

Users experience various levels of QoE which differ based on application, the content delivered, the congestion levels in a network, and the like. Operators of computer networks try to provide high levels of QoE across various applications, but as some applications are able to provide a variety of different types of traffic flows (for example, different content within the different traffic flows), some traffic flows are more affected by latency, loss, or other issues. Operators wish to provide traffic management and provide capacity planning given the various uses of the resources on the network.

As such, there is a need for an improved method and system for capacity planning and congestion management on a network.

The above information is presented as background information only to assist with an understanding of the present disclosure. No determination has been made, and no assertion is made, as to whether any of the above might be applicable as prior art with regard to the present disclosure.

### SUMMARY

In a first aspect, there is provided a method for capacity planning in a computer network, the method includes: determining traffic flow, application and network parameters; collecting the parameters for a predetermined time period; determining the features or parameters associated with various growth models; and combining the growth models to determine network capacity planning and congestion management planning for the network.

In some cases, the parameters are related to application throughput, subscriber throughput and node throughput.

In some cases, the parameters are related to application QoE, subscriber QoE and node QoE.

In some cases, high frequency parameters are aggregated over a longer time period.

In some cases, the growth models are machine learning models.

In some cases, the capacity planning is in a period of months in the future.

In some cases, the capacity planning is performed for one of node, link, or network device.

In some cases, the capacity planning is performed for Node growth based on node capacity/throughput; Node growth based on QoE; and Node growth based on subscriber throughput.

In another aspect, there is provided a system for capacity planning in a computer network, the system including: a data collection module configured to collect data and parameters associated with the traffic flow, applications and nodes and links on the network; a forecasting module having a prediction engine configured to predict growth based on the QoE determined from the collected parameters; and a traffic action module configured to provide growth results and/or congestion management options.

In some cases, the data collection module is configured to collect parameters related to application throughput, subscriber throughput and node throughput.

In some cases, the data collection module is configured to collect parameters related to application QoE, subscriber QoE and node QoE.

In some cases, the data collection module is configured to aggregate high frequency parameters over a longer time period.

In some cases, the forecasting module is configured to use machine learning models for growth models.

In some cases, the traffic action module is configured to provide capacity planning in a period of months in the future.

In some cases, the traffic action module is configured to provide capacity planning for one of node, link, or network device.

In some cases, the traffic action module is configured to provide capacity planning for Node growth based on node capacity/throughput; Node growth based on QoE; and Node growth based on subscriber throughput.

Other aspects and features of the present disclosure will become apparent to those ordinarily skilled in the art upon review of the following description of specific embodiments in conjunction with the accompanying figures.

### BRIEF DESCRIPTION OF FIGURES

Embodiments of the present disclosure will now be described, by way of example only, with reference to the attached Figures.
Figure 1 illustrates a diagram of a computer network architecture including an embodiment of a system for capacity planning;
Figure 2 illustrates a system for capacity planning according to an embodiment;
Figure 3 illustrates the inputs and outputs of the prediction engine according to an embodiment;
Figure 4 illustrates the flow of the method for capacity planning according to an embodiment;
Figure 5 illustrates an example of throughput capacity planning according to an embodiment;
Figure 6 illustrates an example of QoE capacity planning according to an embodiment; and
Figure 7 provides an example prediction according to an embodiment.

### DETAILED DESCRIPTION

In the following, various example systems and methods will be described to provide example embodiment(s). It will be understood that no embodiment described below is intended to limit any claimed invention. The claims are not limited to systems, apparatuses or methods having all of the features of any one embodiment or to features common to multiple or all of the embodiments described herein. A claim may include features taken from any embodiment as would be understood by one of skill in the art. The applicants, inventors or owners reserve all rights that they may have in any invention disclosed herein, for example the right to claim such an invention in a continuing or divisional application and do not intend to abandon, disclaim or dedicate to the public any such invention by its disclosure in this document.

Generally, the present disclosure provides a method and system for capacity planning. The system and method are configured to collect high frequency data at routine intervals to store as historical data. The data is then reviewed in various areas to be correlated and combined to predict growth of the network. The predicted growth may be used for capacity planning and congestion management planning for the network.

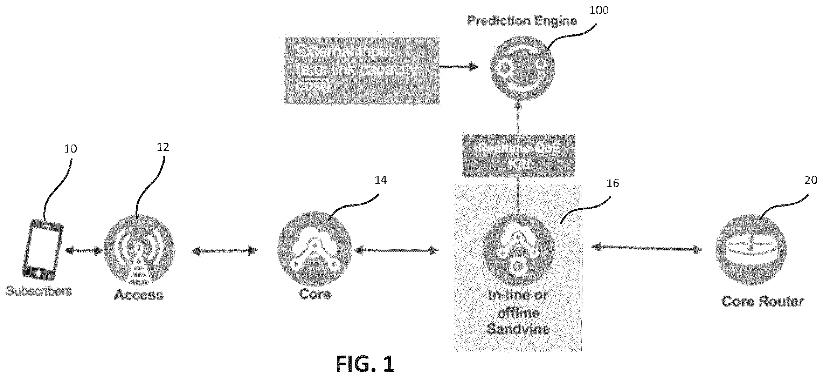

Figure 1 illustrates an environment for an embodiment of the system. A subscriber, using a user device associated with a subscriber 10, initiates a traffic flow with an access network 12. The traffic flow is transmitted to and from a core network 14 from the base station. The traffic flow is seen by a network device 16 for traffic flow analysis and reviewed and analyzed by a system 100 for capacity planning. The system 100 may be included as a component of a network device which resides between the operator's gateway and the core router 20. The system 100 may reside within the operator's or Internet Service Provider's (ISP's) network or may be centrally located and collect data from a plurality of operator's networks. It will be understood that embodiments of the system and method detailed herein are intended to be employed over any type of computer network, for example, fixed line, mobile, satellite or other computer network.

The system 100 is configured to be transparent to users. It will be understood that figure 1 illustrates a high-level network architecture and that a computer network includes further aspects not illustrated.

A system 100 for capacity planning is intended to reside in the core network or receive data from the core network. In particular, the system 100 is intended to be in a location where the system is able to access the data noted herein. It will be understood that in some cases the system may be a physical network device or may be a virtual network device. The system may also be distributed over a number of physical or virtual devices. It will be understood that the system may be used on any IP based networking system, for example, Wi-Fi based, mobile data networks like GPRS, CDMA, 4G, 5G, LTE, satellite based, WLAN based networks, fixed line broadband fiber optic networks as well as on virtual private networks.

Conventionally, network operators have a challenge in knowing and accurately predicting growth in capacity. There have been difficulties determining what is really driving capacity growth. Typically, it has been difficult to know when it is time to upgrade or to enable congestion management to improve QoE, extend upgrade time, or to save Capital Expenditure (CAPEX).

In conventional capacity planning systems, the timing of a node upgrade is typically calculated using linear or simple regression math on a utilization metric. Utilization is typically a function of usage compared to capacity. These systems suffer from lack of accuracy, leading to either upgrading capacity too soon, which wastes CAPEX (upgrade costs tend to decrease over time, so investing early has a higher cost), or upgrading too late which leads to a loss of QoE. As such, there is a desire to have a more accurate system for capacity planning.

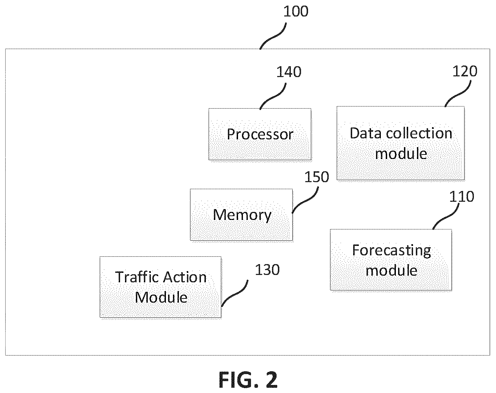

Figure 2 illustrates an embodiment of a system for capacity planning and congestion management. The system is intended to include a data collection module 110, a forecasting module 120, a traffic action module 130, at least one processor 140 and at least one memory component 150. The system is generally intended to be distributed and reside in the data plane. A central processing unit or the control processor is configured to execute the instructions stored in the memory component in order for the modules to execute their functions.

The data collection module 110 is configured to collect data associated with the traffic flows, for example, external inputs such as node capacity, cost of node and the like. The data collection module 110 is further configured to collect node level Key Performance Indicators (KPIs), for example, node throughput, number of subscribers, average round trip time and the like, and application and application category KPls, for example, peak throughput, peak subscribers, application popularity, throughput for application and content categories and the like. The collected data is provided to the forecasting module 120. Provisioning such as node capacity may be performed by the service provider or may be determined by monitoring historical node throughput or the like.

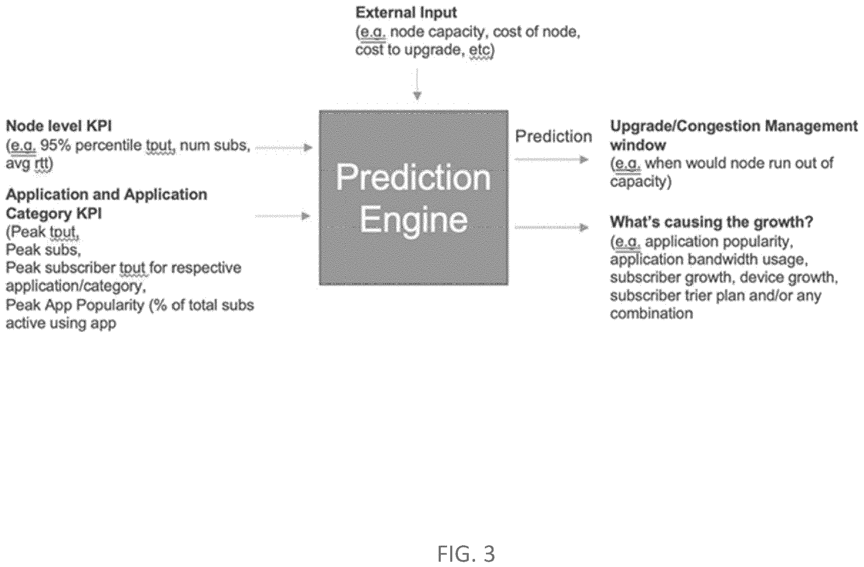

The forecasting module 120 includes a prediction engine, as shown in figure 3, configured to predict aspects related to congestion and capacity of the network. The forecasting module 120 is configured to provide for an upgrade or congestion management window as to when there may be congestion and congestion management techniques that would aid in the improving the QoE for the subscribers. The forecasting module 120 is also configured to determine the cause of growth. The cause of growth may be impacted by application popularity, application bandwidth usage, subscriber growth, device growth, subscriber tier plan and the like, which is intended to be reviewed by the forecasting module.

The traffic action module 130 is configured to determine whether congestion management traffic actions would be beneficial given the prediction from the forecasting module.

By breaking down the network throughput usage into components, and analyzing each components trend, there is intended to be an improvement for the forecasting accuracy of these models. These improvements may be further enhanced with identifying application usage and QoE in the network and the nodes. Using this data, the system is configured to determine what is causing the network growth and predict when capacity needs to be upgraded or when to enable congestion management. The components may be, for example, a node, link, network device or the like. A node, as a point of communication can receive, send, and forward, and process data within the network. A few examples are port, interface or the like.

The data collection module is configured to collect QoE Key Performance Indicators (KPI's) by inline or offline network element that is in the network data path. The data is intended to be collected at a high frequency (for example, every 1 millisecond (ms), every 2 ms, or the like) to capture peak data and to eliminate any outliers.

Network throughput is a function of transfer of data volume over a time interval. If the time interval is sufficiently short, then a network path may be considered to be 100% used when sending a single packet. If the time interval is sufficiently long, then the network path may never be considered to be 100% used because sooner or later there will be idle time (e.g. when a packet is not travelling on the network). The time interval useful to serve as a utilization function for capacity planning should be chosen such that it captures noticeable QoE impact of high utilization. In this document, the system and method are described as using 5 seconds as a time interval, but 1 second, or even 5 minutes, or any time in between could also be used with reasonable results. It will be understood that different time intervals can be used in parallel in the forecasting model with good results.

A longer interval reduces the likelihood of detecting peak link capacity. For instance, consider a scenario where the volume on a link is computed as 10 million bytes over 5 seconds. This translates to a link capacity of 16 Mbps (10,000 * 8 / 5). However, if 5 million bytes are sent within the first 1 second, the resulting capacity would be 40 Mbps (5,000 * 8 / 1 sec).

Embodiments of the system and method detailed herein are intended to determine what makes up the time interval, in this example, 5 seconds of traffic on a network segment. For a forecasting model to be useful, the system and method are intended to find leading indicators or components of growth. In research that has been completed by the applicant, it has been found that the following components when used give good accuracy in forecasting:
- New subscribers - Trend of subscriber count (net new subscribers)
- Application Popularity - Trend of subset of subscribers using a particular application during the time interval; and
- Application Bandwidth - Trend of subscriber application bandwidth.

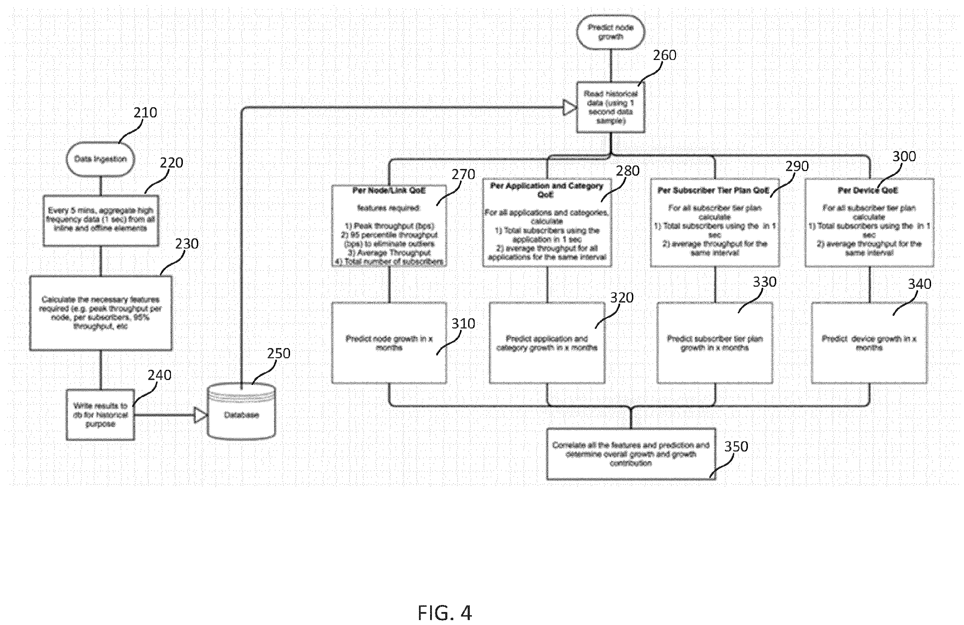

Figure 4 illustrates a flow chart for a method for capacity planning and congestion management. A database is intended to be initiated via data integration at 200. In some cases, at a predetermined interval, for example every 5 minutes, aggregate high frequency data from all inline and offline elements, at 220. High frequency data is intended to be collected routinely at, for example, every 1 ms, every 2 ms, every 1 second or the like. The goal is to get peak link capacity. The method is intended to take the peak link over 5 mins by using 5 seconds, 1 second, or the like samples.

The system is configured to further determine the parameters or circumstances with respect to the features associated with the network, network components, applications and application and content categories, at 230. The results are intended to be stored for historical input into the prediction engine, 240. The results are stored in a database, at 250.

The peak data for each 5-minute interval is stored in the database. In a particular example, the first 5 mins peak calculated at 1 second = 10Gbps and the next 5 mins peak calculated at 1 second = 11Gbps. Further, the application peak is also calculated, and determined that the first 5 mins - Application peak for Netflix 400 Mbps and the next 5 mins - Application peak for Netflix 450 Mbps. The data regarding node peak and application peak throughput is stored in the database. This information is necessary for computing the peaks of both nodes and applications over a 1-day interval.

Once a database has been created, the system is configured to predict growth of the network. The historical data is read from the database, at 260. The system is configured to determine whether to predict per node and/or link QoE, at 270, per Application and Category QoE, at 280, Per Subscriber tier plan QoE, at 290, per device Qo, at 300 or the like. In some cases, to determine per node and/or link QoE, at 270, the features or parameters used may include peak throughput, 95 percentile throughput, average throughput and total number of subscribers and a node or link growth is configured to be predicted over a chosen time period, for example predict growth in a particular number of months, 310.

Per application and category QoE, at 280, the system is configured to determine the total subscribers using the application in each high frequency data collections and an average throughput for all applications for the same interval. The system predicts the application and category growth in a chosen time period, at 320. For subscriber tier plan QoE, at 290, the system is configured to determine the total subscribers using the tier plan within each high frequency data collection period and the average throughput for the same interval. The system is configured to predict subscriber tier plan growth in the chosen time period, at 330. For device QoE, at 300, the system determines the total subscribers using the device in each high frequency data collection period and the average thought for the same interval. The device's growth prediction is then predicted in the chosen time period, at 340. Once the predictions have been made, the system is configured to correlate all the features and predictions to determine an overall growth and growth contribution to the network, at 350.

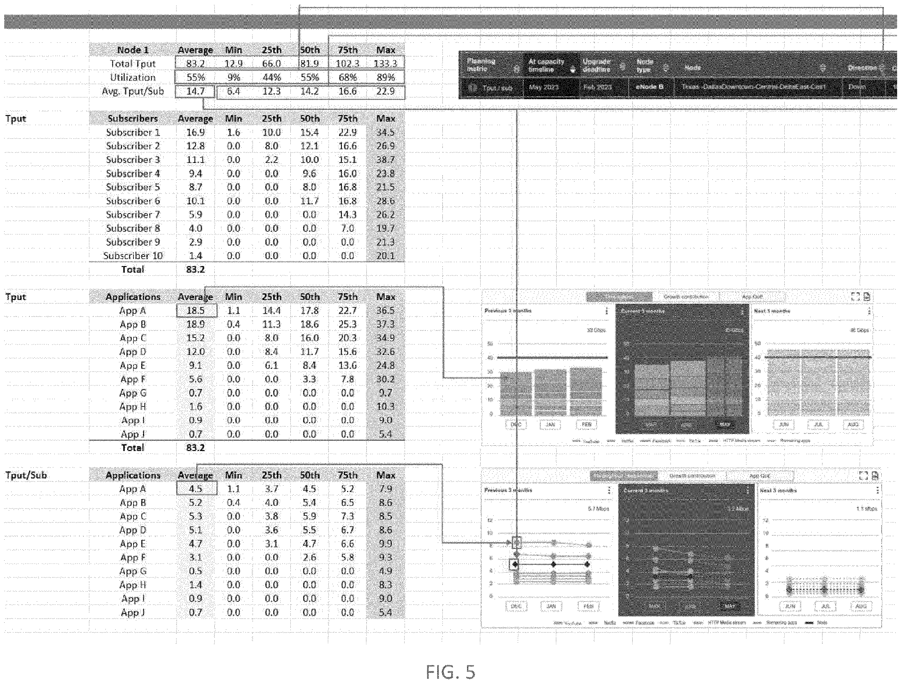

Figure 5 illustrates determining Node throughput using the method detailed herein. Node throughput is configured to determine Subscriber Throughput, and Application throughput based on high-frequency samples, such as those taken at intervals of 1 second or 256 milliseconds. In this example, the system is configured to determine the daily peak throughput for each node, subscriber, and application. Extracted from the peak values of 256 ms sample data, using the 95th percentile to exclude outliers. The system is configured to determine each of Application Throughput, Subscriber Throughput, and Throughput per Subscriber based on the collected data. The system then aggregates the results to obtain the overall Node Throughout

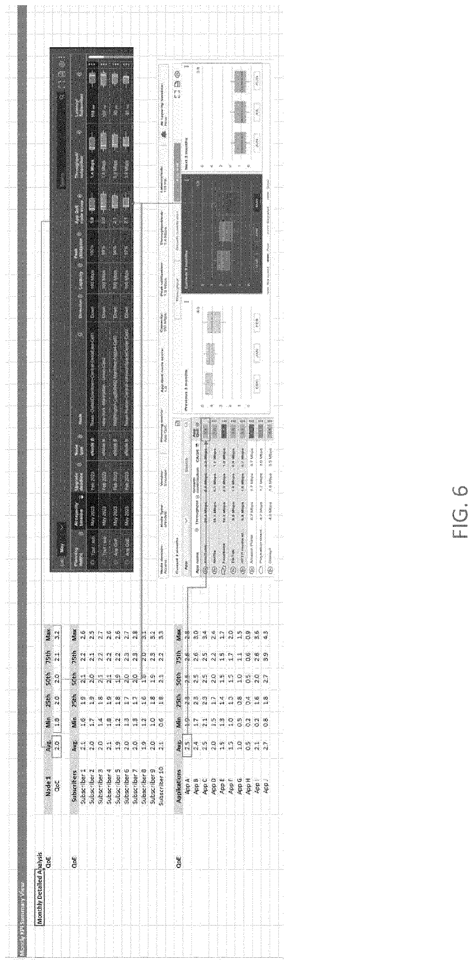

Figure 6 illustrates determining Quality of Experience (QoE) rollup in a similar manner as Node throughput. In particular, QoE rollup is determined using Application QoE, Subscriber QoE and Node QoE. These results are intended to be aggregated to determine an overall QoE.

Embodiments of the system and method are configured to predict upgrade time for the network's capacity and determine when congestion management should be enabled. Once a regression analysis on each component is done and a forecast is produced, the system is also intended to be configured to determine the results of a what-if analysis on each component. For example:
- What if Netflix^{™} instead of the forecasted popularity growth of 5% year on year would grow 7%?
- What if the network attracted 3000 more net new subscribers?

Prediction is carried out using various machine learning methods. The selected method analyzes multiple features and considers seasonality to forecast node growth. In some cases, the operator or service provider can choose from three prediction models:
1. Node growth based on node capacity/throughput.
2. Node growth based on QoE (Quality of Experience) - assessing whether the node is becoming congested over time.
3. Node growth based on subscriber throughput - examining whether the average throughput per subscriber is declining over time. This is particularly valuable in a mobile network, where service providers may define congestion or capacity issues based on throughput falling below a specified threshold (e.g., < X Mbps).

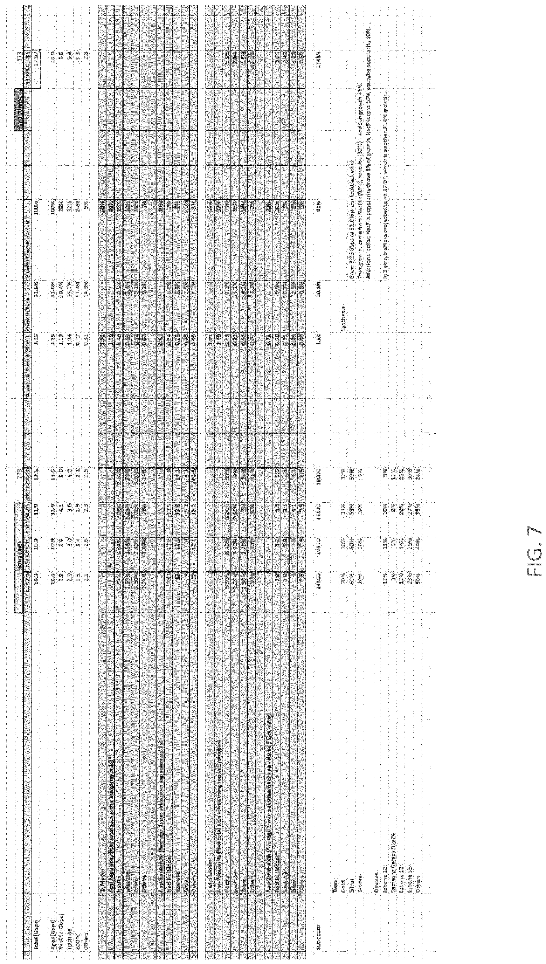

In order to predict 12 months in advance, it is beneficial to have sufficient historical data as shown in figure 7. Typically, the rate is about 5-10X of historical data. For example, predicting 3 months would be preferred with at least 15-30 months of historical data.

In the preceding description, for purposes of explanation, numerous details are set forth in order to provide a thorough understanding of the embodiments. However, it will be apparent to one skilled in the art that these specific details may not be required. In other instances, well-known structures may be shown in block diagram form in order not to obscure the understanding. For example, specific details are not provided as to whether the embodiments or elements thereof described herein are implemented as a software routine, hardware circuit, firmware, or a combination thereof.

Embodiments of the disclosure or elements thereof can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. A method for capacity planning in a computer network, the method comprises:
determining traffic flow, application and network parameters;
collecting the parameters for a predetermined time period;
determining the features or parameters associated with various growth models; and
combining the growth models to determine network capacity planning and congestion management planning for the network.

2. The method of claim 1 wherein the parameters are related to application throughput, subscriber throughput and node throughput.

3. The method of claim 1 or 2 wherein the parameters are related to application QoE, subscriber QoE and node QoE.

4. The method of any one of claims 1 to 3 wherein high frequency parameters are aggregated over a longer time period.

5. The method of any one of claims 1 to 4 wherein the growth models are machine learning models.

6. The method of any one of claims 1 to 5 wherein the capacity planning is in a period of months in the future.

7. The method of any one of claims 1 to 6 wherein the capacity planning is performed for one of node, link, or network device.

8. The method of claim 7 wherein the capacity planning is performed for Node growth based on node capacity/throughput; Node growth based on QoE; and Node growth based on subscriber throughput.

9. A system for capacity planning in a computer network, the system comprising:
a data collection module configured to collect data and parameters associated with the traffic flow, applications and nodes and links on the network;
a forecasting module having a prediction engine configured to predict growth based on the QoE determined from the collected parameters; and
a traffic action module configured to provide growth results and/or congestion management options.

10. The system of claim 9 wherein the data collection module is configured to collect parameters related to application throughput, subscriber throughput and node throughput.

11. The system of claim 9 or 10 wherein the data collection module is configured to collect parameters related to application QoE, subscriber QoE and node QoE.

12. The system of any one of claims 9 to 11 wherein the data collection module is configured to aggregate high frequency parameters over a longer time period.

13. The system of any one of claims 9 to 12 wherein the forecasting module is configured to use machine learning models for growth models.

14. The system of any one of claims 9 to 13 wherein the traffic action module is configured to provide capacity planning for one of node, link, or network device.

15. The system of any one of claims 9 to 14 wherein the traffic action module is configured to provide capacity planning for Node growth based on node capacity/throughput; Node growth based on QoE; and Node growth based on subscriber throughput.
